## Europäisches Patentamt
## European Patent Office
## Office européen des brevets

(11) Veröffentlichungsnummer: **0 046 823**
**B1**

(12) **EUROPÄISCHE PATENTSCHRIFT**

(45) Veröffentlichungstag der Patentschrift:
21.09.83

(21) Anmeldenummer: 80108046.6

(22) Anmeldetag: 19.12.80

(51) Int. Cl.³: **C 09 J 3/14,** C 08 L 31/04,
C 08 L 33/08, B 32 B 27/04

(54) Laminier- und Kaschierklebstoff, seine Herstellung und seine Verwendung.

(30) Priorität: 29.08.80 DE 3032678

(43) Veröffentlichungstag der Anmeldung:
10.03.82 Patentblatt 82/10

(45) Bekanntmachung des Hinweises auf die Patenterteilung:
21.09.83 Patentblatt 83/38

(84) Benannte Vertragsstaaten:
AT BE CH DE FR GB IT LI NL SE

(56) Entgegenhaltungen:
DE-A-1 937 033
DE-A-1 966 101
DE-A-2 226 832
DE-A-2 601 200
US-A-3 905 931

CHEMICAL ABSTRACTS, Band 84, Nr. 12, 22. März
1976, Seite 31, Nr. 75020z Columbus, Ohio, U.S.A.

CHEMICAL ABSTRACTS, Band 83, Nr. 20, 17. November 1975, Seite 36, Nr. 165062y Columbus, Ohio, U.S.A.

(73) Patentinhaber: WACKER-CHEMIE GMBH,
Prinzregentenstrasse 22, D-8000 München 22 (DE)

(72) Erfinder: Merz, Ekkehard, Dr. Dipl.-Chem., 42, Rue de
Fècamp, F-75012 Paris XII (FR)
Erfinder: Singer, Robert, Dr. Dipl.-Chem.,
Hechenbergstrasse 35, D-8263 Burghausen (DE)

Laminier- und Kaschierklebstoff, seine Herstellung und seine Verwendung

In der Verpackungsindustrie stellt sich vielfach die Aufgabe, Verpackungsmaterial aus mehr als einer Schicht zu verwenden, z.B. Kartons oder Papier zum mechanischen Schutz mit Kunststofffolien zu beschichten oder unterschiedliche Folien aufeinander zu kaschieren, um beispielsweise die Gas- und/oder Flüssigkeitsdurchlässigkeit zu vermindern.

Für diese Zwecke wurden bisher vielfach Verschweisstechniken angewandt oder lösungsmittelhaltige Klebstoffe eingesetzt. Auf die Nachteile der Flächenverschweissung braucht hier nicht näher eingegangen zu werden, ebenso liegen die Probleme des Einsatzes von lösungsmittelhaltigen Klebstoffen bezüglich Umwelt- und Arbeitsplatzhygiene und Brandgefahr auf der Hand, von den wirtschaftlichen Nachteilen ganz abgesehen.

Zur Vermeidung dieser Nachteile wurde in der JP-OS 77/42532 (gemäss Referat in Chemical Abstracts 87 (1977) 40402 k) ein Klebstoff vorgeschlagen, der diese Probleme lösen soll. Der dort eingesetzte Klebstoff besteht aus einer wässrigen Dispersion eines Ethylen-Vinylacetat-Copolymers (PEVAC), in das 5 bis 30 Gew.-%, bezogen auf PEVAC, Epoxyharze eingearbeitet sind und der ein Aminhärter zugesetzt wird.

Der Klebstoff wird beispielsweise hergestellt durch Lösen der Mischung einer wässrigen Lösung von Schutzkolloiden und Natriumacetat mit Epoxidharz in Vinylacetat, Zugabe von Ethylen und Polymerisation mit Hilfe von wasserlöslichem Redox-Katalysator-System, sowie anschliessender Zugabe von Polyamin.

Die Verwendung solcher Klebstoffe ergibt durchaus befriedigende Ergebnisse bezüglich der Schälfestigkeit, sofern das Laminat nicht thermisch und/oder durch Feuchtigkeit beansprucht wird.

Aufgabe der Erfindung war demgemäss, einen Klebstoff zur Verfügung zu stellen, der nach seiner Anwendung Laminate bzw. kaschierte Formgebilde ergibt, die verbesserte Festigkeit des Verbundes, insbesondere auch bei und nach Wärmebeanspruchung und vielfach sogar bei und nach Beanspruchung durch siedendes Wasser besitzen.

Diese Aufgabe wird durch die vorliegende Erfindung gelöst, wobei überraschenderweise sogar solche Festigkeiten der Verklebung erreicht werden können, dass Versuche, die Verklebung mechanisch zu lösen, selbst zur Zerstörung der aneinandergeklebten Schichten des Laminats bzw. der kaschierten Formgebilde führen.

Gegenstand der Erfindung ist ein Laminier- und Kaschierklebstoff bestehend aus

a) wässriger Dispersion von Copolymerisaten aus Einheiten von Vinylestern mit Alkylcarbonsäuren mit 1 bis 18 C-Atomen oder Acrylsäureestern mit Alkanolen mit 1 bis 18 C-Atomen oder Gemischen dieser Monomeren und mindestens einem weiteren Monomeren mit Feststoffgehalten von 3 bis 70 Gew.-%,

b) 0,05 bis 20 Gew.-% Epoxidverbindung mit mindestens einer Epoxidgruppe je Molekül und mit mittleren Epoxidäquivalentgewichten von 80 bis 1000,

c) 0,05 bis 20 Gew.-% Aminhärter, die Mengen jeweils bezogen auf das Gewicht der Copolymerisate, sowie

d) gegebenenfalls weiteren Zusatzstoffen, das dadurch gekennzeichnet ist, dass die Copolymerisate der Dispersion a) zusätzlich, bezogen auf Gesamtgewicht der Copolymerisate, 0,1 bis 10 Gew.-% einpolymerisierte Einheiten von ethylenisch-ungesättigten Monomeren mit Hydroxyl- und Carboxylresten als funktionelle Gruppen enthalten.

Der Klebstoff wird bevorzugt in der Weise hergestellt, dass zum einen 1 Gewichtsteil der Dispersion a) mit 0,1 bis 40 Gew.-%, bezogen auf Copolymerisat, Epoxidverbindung der vorstehend definierten Art und gegebenenfalls weiteren Zusatzstoffen und zum anderen 0,7 bis 1,3 Gew.-Tl. der Dispersion a) mit 0,1 bis 40 Gew.-%, bezogen auf Copolymerisat, Aminhärter und gegebenenfalls weiteren Zusatzstoffen versetzt und die so erhaltenen Komponenten anschliessend homogen miteinander vermischt werden.

Die erfindungsgemässen Klebstoffe eignen sich hervorragend zur Herstellung von Laminaten aus Flächengebilden oder Formkörpern aus einem oder mehreren der folgenden Materialien: Polyolefinen, Polyestern, Polyamiden, Vinyl- und Vinylidenpolymerisaten, modifizierter Zellulose.

Selbstverständlich werden unter den genannten Materialien auch solche verstanden, die Mischungen der genannten Stoffe enthalten, also Verschnitte z.B. von Polyamid und Polyester, aber auch (Pfropf-)Copolymerisate aus Monomereinheiten aus der Gruppe der alpha-Olefine, z.B. Ethylen, Vinyl- und Vinylidenhalogenide, z.B. Vinylchlorid und Vinylidenchlorid, Vinylester, z.B. Vinylacetat, Vinylpropionat und Vinyllaurat, alpha, beta-ethylenisch ungesättigten Carbonsäuren.

Ausserdem lassen sich die erfindungsgemässen Klebstoffe vorteilhaft zur Kaschierung von Papier, Karton oder Metall, z.B. Aluminium und Zinn, mit Flächengebilden aus den vorstehend genannten Materialien verwenden.

Besonders vorzugsweise werden die vorstehenden Materialien, abgesehen von Papier und Pappe (Karton), als Flächengebilde, insbesondere als Folien eingesetzt.

Die wässrige Dispersion a) wird vorzugsweise hergestellt durch Copolymerisation von Vinylestern mit gerad- oder verzweigtkettigen, vorzugsweise gesättigten Monocarbonsäuren mit 1 bis ca. 18 C-Atomen oder Acrylsäureestern mit Alkanolen mit 1 bis ca. 18 C-Atomen oder Gemischen dieser Monomeren mit, bezogen auf Gesamtmonomere, etwa 0,1 bis etwa 10 Gew.-% ethylenisch-ungesättigten Monomeren, die als funktionelle Gruppen Hydroxyl- und Carboxylre-

ste besitzen, und gegebenenfalls weiterer Monomeren in Gegenwart von üblichen Schutzkolloiden und/oder Emulgatoren sowie vorzugsweise wasserlöslichen Initiatorsystemen. Es ist auch möglich, die Epoxidverbindungen bereits vor, zu Beginn oder während der Polymerisation zuzusetzen. Bevorzugt werden diese Verbindung allerdings erst nach Beendigung der Polymerisation zugemischt.

Als ethylenisch-ungesättigte Monomere, die als funktionelle Gruppen Hydroxyl- und Carboxylreste besitzen, werden vorzugsweise Mono- und Dicarbonsäuren mit 3 bis 18 C-Atomen, beispielsweise Acrylsäure, Methacrylsäure, Crotonsäure, Maleinsäure, Fumarsäure und Itakonsäure, oder N-Methylolacrylamid oder N-Methylolmethacrylamid oder Gemische dieser Verbindungen eingesetzt. Besonders bevorzugt sind die genannten Methylolverbindungen.

Als weitere Monomere bei der Herstellung der Copolymerisate kommen in Frage:

alpha-Olefine, insbesondere solche mit 2 bis 4 C-Atomen, z.B. Ethylen und Propylen, Methacrylsäureester von Alkanolen mit 1 bis ca. 18 C-Atomen, insbesondere z.B. Methylmethacrylat, Ethylmethacrylat, Butylmethacrylat, gegebenenfalls durch Alkylgruppen substituierte Amide der Acryl- und Methacrylsäure, z.B. Acrylamid, Methacrylamid, N-Methyl(meth)acrylamid, N,N-Dimethyl(meth)acrylamid, N-Ethyl(meth)-acrylamid, N,N-Diethyl (meth)acrylamid, Acrylnitril, Methacrylnitril, Ester der Fumar- und der Maleinsäure, z.B.Dibutylmaleinat, sowie N-Vinylpyrrolidon.Besonders bevorzugt wird Ethylen eingesetzt.

Die erfindungsgemäss eingesetzten Copolymerdispersionen werden nach den bekannten Polymerisationsverfahren vorzugsweise durch Emulsionspolymerisation, mit Feststoffgehalten von 3 bis 70 Gew.-%, bezogen auf Gesamtgewicht, hergestellt.

Einem Teil der Dispersion a) wird Epoxidverbindung zugemischt. Diese Epoxidverbindungen sind z.B. solche auf der Basis von Epichlorhydrin-Bisphenol A, Glycidyläther mehrwertiger Alkanole, Epoxypropylaminen, Novolakepoxyverbindungen, cycloaliphatischen Harzen, z.B. Dicyclopentadienyldioxid, Diglycidylester der Hexahydrophthalsäure, Vinylcyclohexendioxid, Epoxyverbindungen von Alkylphenolen oder von Fettsäurederivaten. Sie besitzen Epoxidäquivalentgewichte von 80 bis 1000 und weisen bei 25°C vorzugsweise Viskositäten von 0,2 bis 40 Pa·s auf. Sie sind vielfach im Handel erhältlich. Diese Epoxidverbindungen können als solche eingesetzt werden, es ist aber auch möglich, sie zunächst in Wasser zu dispergieren und dann diese Dispersionen einzusetzen. Vorzugsweise wird diesem Teil der Dispersion a) die Epoxidverbindung in Mengen von 5 bis 30 Gew.-%, bezogen auf Copolymerisat, zugesetzt.

Einem anderen Teil der Dispersion a) wird Aminhärter vorzugsweise in Mengen von 5 bis 30 Gew.-%, bezogen auf Copolymerisat, zugesetzt. Diese Härter setzen sich im allgemeinen aus Aminen und/oder Amiden zusammen, vielfach auch aus Polyaminen und/der Polyamide. Sie sind vielfach ebenfalls im Handel erhältlich. Beispiele sind aliphatische Polyamine, ihre Derivate und Salze, z.B. Diethylentriamin, Triethylentetramin, Dimethylaminopropylamin, Ethylendiamin, Addukte dieser Verbindungen mit mono- oder polyfunktionellen Glycidyläthern z.B. von Bisphenol A oder Butylglycidyläther, Reaktionsprodukte dieser Verbindungen mit Ethylenoxid, Propylenoxid oder Acrylnitril, aromatische Amine, z.B. m-Phenylendiamin, 4,4'-Methylendianilin, 4,4'-Diaminodiphenylsulfon, sekundäre und tertiäre aliphatische Amine und deren Salze, z.B. Piperidin, Benzyldimethylamin, Dimethylaminomethylphenol, Polyaminoimidazoline, Polyaminoamide, z.B. harzartige Kondensationsprodukte aus oligomerisierten vegetabilischen Ölen, z.B. Tallölen, ungesättigten Fettsäuren und Acryl- oder Alkylpolyaminen.

Die beiden Dispersionen, von denen eine die Epoxidverbindung und die andere den Härter enthält, werden anschliessend im Verhältnis von etwa 1:0,7 bis 1:1,3 zu dem erfindungsgemässen Reaktivkleber zusammengemischt. Vorzugsweise liegt das Verhältnis von Epoxidverbindung und Härter dann in einem Bereich von 1:1 bis 400:1, insbesondere zwischen 1:1 und 25:1.

Vielfach hat es sich erwiesen, dass das Verhältnis 1:1 optimale Ergebnisse zeitigt. Zur Erzielung besonderer Effekte kann, falls dies gewünscht wird, der Aminhärter gegenüber der Epoxidverbindung auch im Überschutz verwendet werden.

Der so erhaltene Klebstoff besitzt im allgemeinen Topfzeiten von einigen Stunden bis zu etwa 2 Wochen. Die gewünschte Topfzeit lässt sich vom Fachmann leicht, gegebenenfalls nach wenigen Versuchen einstellen.

Der so erhaltene Klebstoff kann als solcher eingesetzt werden oder aber noch mit Zusätzen gemischt werden. Vielfach ist es wünschenswert, bestimmte Viskositäten einzustellen, beispielsweise durch Zusatz von Wasser oder aber von Füllstoff. Die optimalen Viskositäten hängen von der Art der beabsichtigten Verarbeitung ab. So haben sich Klebstoffdispersionen mit Viskositäten von ca. 10 bis 500 mPa·s als besonders vorteilhaft für das Auftragen mittels Walze, z.B. auch bei «reverse roll coating», Tiefdruck oder Luftbürste erwiesen. Bei Auftragung mittels Rakelvorrichtung können erfindungsgemässe Klebstoffe mit Viskositäten von bis zu 5000 mPa·s besonders vorteilhaft eingesetzt werden.

Die beiden Komponenten bestehend aus Copolymerdispersion und Epoxidverbindung bzw. Copolymerdispersion und Aminhärter können selbstverständlich auch ausgehend von zwei unterschiedlichen Copolymerdispersionen hergestellt werden. Im allgemeinen wird jedoch bevorzugt, eine Dispersion in etwa gleiche Teile aufzuteilen und mit Epoxidverbindung bzw. Härter zu versetzen. Gleichzeitig oder danach können diesen beiden Komponenten, wenn dies zur Erzielung besonderer Effekte gewünscht wird, auch noch weitere Zusatzstoffe zugegeben werden.

Beispiele hierfür sind Füllstoffe, z.B. feinstteiliges Siliciumdioxid, Russ oder Kunststoffpulver, Farbstoffe, Thixotropiermittel, Weichmacher und Dispergierhilfsstoffe. Vorzugsweise wird der Zusatz jedoch auf bis zu 10 Gew.-%, bezogen auf Feststoffgehalt des Klebers, beschränkt. Insbesondere werden keine Füllstoffe oder Pigmente zugesetzt, wenn durchscheinende bis klar durchsichtige Laminate erzeugt werden sollen.

Der erfindungsgemässe Laminier- und Kaschierkleber wird im allgemeinen durch Walzenauftrag, Luftbürste, Tiefdruck, Rakelvorrichtung oder Aufsprühen auf die Flächengebilde oder Formkörper, insbesondere auf die Folie aufgebracht. Es hat sich teilweise als vorteilhaft erwiesen, die zu beschichtende Oberfläche vorzubehandeln, beispielsweise durch Koronarentladungen, Ozonisierung, Primer-Zusatz, letzteres insbesondere bei Metallen, oder ähnliches. Im allgemeinen genügen Nassfilmstärken des Klebers von 10 bis 30 μm. Die Dispersionsschicht wird anschiessend durch Konvektion heisser Gase, z.B. Heissluft, durch Infrarot, Hochfrequenz oder ein anderes übliches Trockenverfahren getrocknet. Anschliessend wird das Flächengebilde oder der Formkörper vorzugsweise bei Temperaturen zwischen 60 und 100°C gegen das (den) als andere Schicht des Laminats vorgesehene(n) Flächengebilde (Formkörper) vielfach bei Drücken von etwa 10 bis etwa 1000 kN/m² kaschiert. In einer besonders bevorzugten Ausführungsform wird auf diese Weise eine Folie aus den eingangs genannten Materialien mit einer weiteren Folie, die sich im Material von der anderen unterscheiden kann, verbunden.

In einer weiteren bevorzugten Ausführungsform wird Papier, Pappe (Karton) oder Metall, letzteres vorzugsweise ebenfalls als Folie, mit einer Folie aus den eingangs aufgezählten Materialien mit Hilfe des erfindungsgemässen Klebers kaschiert.

Überraschenderweise zeigen die Laminate oder Kaschierprodukte, die unter Verwendung des erfindungsgemässen Klebers hergestellt worden sind, eine gegenüber dem Stand der Technik erhöhte Festigkeit, insbesondere bei und nach gegebenenfalls längerzeitiger Wärmeeinwirkung und Einwirkung von Wasser. So sind solche Produkte im Unterschied zu den nach bisherigen Verfahren hergestellten Laminaten vielfach sogar sterilisierfest. Vielfach wird die Grenze für die thermische, mechanische und chemische Belastbarkeit nicht mehr von der Festigkeit der Verklebung, sondern von der Festigkeit der mittels des erfindungsgemässen Laminier- und Kaschierklebers verbundenen Flächengebilde oder Formkörper gesetzt.

In den folgenden Vergleichsversuchen und Beispielen wurden die Klebstoff-Dispersionen mit einer Nassfilmdicke von etwa 12 μm auf etwa 60 μm starke Polyethylenfolie in 2 cm Breite aufgetragen, durch Heissluft (ca. 80 bis 90°C) getrocknet und dann 1 Sekunde lang mit 392,3 kN/m² gegen eine zweite Polyethylenfolie bei ca. 90°C versiegelt. Nach der jeweils angegebenen Lagerzeit werden die beiden Folien mit einer Geschwindigkeit von 300 mm/min im Winkel von 180° über eine Länge von 15 cm auseinandergezogen. Die dazu benötigte Kraft wurde in Newton gemessen und als Mass für die Schälfestigkeit angegeben.

Beispiel 1

100 Gew.-Tl. einer wässrigen Dispersion eines Copolymerisats mit einer Zusammensetzung aus 52 Gew.-% Vinylacetat-, 6 Gew.-% Butylacrylat-, 39 Gew.-% Ethylen- und 3 Gew.-% N–Methylolacrylamideinheiten mit einem Festgehalt von 45 Gew.-% wurden mit 18 Gew.-Tl. einer wässrigen Emulsion, die 50 Gew.-%, bezogen auf das Gesamtgewicht dieser Emulsion, eines Epoxidharzes mit einem Epoxidäquivalentgewicht von 178 bis 196, einem Epoxidwert von 0,51 bis 0,56 und einer Viskosität bei 25°C von 6 bis 10 Pa·s versetzt. Der Gesamtfestgehalt der so hergestellten Dispersion wurde dann mit Wasser auf 40 Gew.-% eingestellt.

Weitere 100 Gew.-Tl. derselben Copolymerisatdispersion wurden mit 18 Gew.-Tl. einer 50gewichtsprozentigen Lösung eines handelsüblichen Polyaminoimidazolinharzes in verdünnter Essigsäure versetzt und anschliessend ebenfalls auf einen Festgehalt von 40 Gew.-% eingestellt.

Das Polyaminoimidazolinharz weist als 75gewichtsprozentige Lösung in verdünnter Essigsäure bei 25°C eine Viskosität von 10 bis 20 Pa·s und eine Aminzahl von 210 bis 240 auf.

Beide modifizierten Copolymerdispersionen wurden zusammengemischt und auf eine 60 μm starke Polyethylenfolie in einer solchen Menge aufgetragen, dass jeder m² Folie mit ca. 5 g Trockenmasse des Klebers beschichtet war. Nach dem Abtrocknen mit Heissluft wurde bei 80 bis 90°C gegen eine gleiche Polyethylenfolie versiegelt.

Es wurden folgende Schälfestigkeiten gemessen:

| Test | Lagerdauer | Lagerbedingungen | Kraft (N) |
|------|-----------|------------------|-----------|
| a) | 2 h | 23°C, 50% relative Luftfeuchte | 3–3,5 |
| b) | 30 min 1 h | kochendes Wasser, dann kaltes Wasser | 6,5–7 |
| c) | 7 d | 40°C, 30% relative Luftfeuchte | ca. 7 |
| d) | 7 d | 40°C, 30% relative Luftfeuchte | 8–8,5 |
| | 30 min 1 h | kochendes Wasser, dann kaltes Wasser (ca 10°C) | |

Beispiel 2

Beispiel 1 wurde wiederholt mit der Abänderung, dass die Dispersion mit 45 Gew.-% Festgehalt ein Copolymerisat aus 61 Gew.-% Vinylace-

tat-, 7 Gew.-% Butylacrylat-, 29 Gew.-% Ethylen- und 3 Gew.-% N–Methylolacrylamideinheiten enthielt.

Als Schälfestigkeit wurden gemessen:

| Test gemäss Beispiel 1 | a) | b) | c) | d) |
|---|---|---|---|---|
| Schälkraft (N) | 9,5–10 | 9,5–10 | Folie gerissen | Folie gerissen |

Vergleichsversuch

Beispiel 1 wurde wiederholt mit der Abänderung, dass eine wässrige Dispersion mit 45 Gew.-% Festgehalt eines Copolymeren aus 78 Gew.-% Vinylacetat und 22 Gew.-% Äthylen verwendet wurde.

Die Lagerung analog der Tests a) und c) von Beispiel 1 ergaben jeweils Schälfestigkeiten von 3 bis 3,5 N.

Bei den Tests b) und d) gemäss Beispiel 1 konnte praktisch keine Schälfestigkeit mehr festgestellt werden.

Beispiel 3

Beispiel 1 wurde wiederholt mit der Abänderung, dass die Ausgangsdispersion mit 65% Festgehalt ein Copolymerisat aus 95 Gew.-% Acrylsäureethylester und 4 Gew.-% N–Methylolacrylamideinheiten enthielt.

Als Schälfestigkeiten wurden gemessen:

| Test gemäss Beispiel 1 | a) | b) | c) | d) |
|---|---|---|---|---|
| Schälkraft (N) | 10–10,5 | 8–9 | 12,5–13 | 12–12,5 |

## Patentansprüche

1. Kaschier- und Laminierklebstoff bestehend aus

a) wässriger Dispersion von Copolymerisaten aus Einheiten von Vinylestern mit Alkylcarbonsäuren mit 1 bis 18 C-Atomen oder Acrylsäureestern mit Alkanolen mit 1 bis 18 C-Atomen oder Gemischen dieser Monomeren und mindestens einem weiteren Monomeren mit Feststoffgehalten von 3 bis 70 Gew.-%,

b) 0,05 bis 20 Gew.-% Epoxidverbindung mit mindestens einer Epoxidgruppe je Molekül und mittleren Epoxidäquivalentgewichten von 80 bis 1000,

c) 0,05 bis 20 Gew.-% Aminhärter, die Mengen jeweils bezogen auf das Gewicht der Copolymerisate sowie

d) gegebenenfalls weiteren Zustzstoffen, dadurch gekennzeichnet, dass die Copolymerisate der Dispersion a) zusätzlich, bezogen auf Gesamtgewicht der Copolymerisate, 0,1 bis 10 Gew.-% einpolymerisierte Einheiten von ethylenisch-ungesättigten Monomeren mit Hydroxyl- und Carboxylresten als funktionelle Gruppen enthalten.

2. Kaschier- und Laminierklebstoff nach Anspruch 1, dadurch gekennzeichnet, dass die einpolymerisierten Einheiten der funktionellen Monomeren solche von ethylenisch-ungesättigten Mono- und/oder Dicarbonsäuren mit 3 bis 18 C-Atomen sind.

3. Kaschier- und Laminierklebstoff nach Anspruch 1, dadurch gekennzeichnet, dass die einpolymerisierten Einheiten der funktionellen Monomeren solche von N–Methylol(meth)acrylamid sind.

4. Verfahren zur Herstellung des Klebstoffs nach Anspruch 1, dadurch gekennzeichnet, dass

I. 1 Gew.-Tl. der Dispersion a, mit einem Festgehalt von 3 bis 70 Gew.-% mit 0,1 bis 40 Gew.-%, bezogen auf Copolymerisat, Epoxidverbindung mit mittleren Epoxidäquivalentgewichten von 80 bis 1000 und mit mindestens einer Epoxidgruppe je Molekül und gegebenenfalls weiteren Zusatzstoffen,

II. 0,7 bis 1,3 Gew.-Tl. der unter I. genannten Dispersion a) mit 0,1 bis 40 Gew.-%, bezogen auf Copolymerisat, Aminhärter und gegebenenfalls weiteren Zusatzstoffen versetzt und diese Komponenten I und II sodann homogen miteinander vermischt werden.

5. Verwendung des Klebstoffs nach Anspruch 1 zur Herstellung von Laminaten aus Flächengebilden aus Polyolefin, Polyester, Polyamid, Vinyl- und/oder Vinylidenpolymerisat und/oder aus modifizierter Zellulose.

6. Verwendung des Klebstoffs nach Anspruch 1 zur Kaschierung von Papier, Karton oder Metall mit Flächengebilden aus Polyolefin, Polyester, Polyamid, Vinyl- und/oder Vinylidenpolymerisat und/oder modifizierter Zellulose.

## Claims

1. Coating and laminating adhesive consisting of

a) an aqueous dispersion of copolymers comprising units of a vinyl ester of an alkanecarboxylic acid having from 1 to 18 carbon atoms, or of an acrylic acid ester with an alkanol having from 1 to 18 carbon atoms, or a mixture of those monomers, and at least one further monomer, having solids contents of from 3 to 70% by weight,

b) 0.05 to 20% by weight of an epoxy compound having at least one epoxy group per molecule and having a mean epoxy equivalent weight of from 80 to 1000,

c) 0.05 to 20% by weight of an amine hardener, the amounts in each case being based on the weight of the copolymers, and,

d) optionally, further additives, characterised in that the copolymers of the dispersion a) additionally contain from 0.1 to 10% by weight, based on the total weight of the copolymers, of units, introduced by polymerisation, of an ethylenically unsaturated monomer having hydroxyl and carboxyl radicals as functional groups.

2. Coating and laminating adhesive according to claim 1, characterised in that the units of functional monomers introduced by polymerisation are units of ethylenically unsaturated monocarboxylic and/or dicarboxylic acids having from 3 to 18 carbon atoms.

3. Coating and laminating adhesive according to claim 1, characterised in that the units of functional monomers introduced by polymerisation are units of N-methylol(meth)acrylamide.

4. Process for the manufacture of the adhesive according to claim 1, characterised in that

I. 0.1 to 40% by weight, based on the copolymer, of an epoxy compound having a mean epoxy equivalent weight, of 80 to 1000 and at least one epoxy group per molecule, and optionally further additives, is added to 1 part by weight of dispersion a), having a solids content of from 3 to 70% by weight

II. 0.1 to 40% by weight, based on the copolymer, of amine hardener, and optionally further additives, is added to 0.7 to 1.3 parts by weight of dispersion a), as defined under point I,

and those components I and II are then homogeneously mixed with one another.

5. Use of the adhesive according to claim 1 for the manufacture of laminates of sheet-like structures of polyolefin, polyester, polyamide, vinyl and/or vinylidene polymer and/or modified cellulose.

6. Use of the adhesive according to claim 1 for coating paper, cardboard or metal with sheet-like structures of polyolefin, polyester, polyamide, vinyl and/or vinylidene polymer and/or modified cellulose.

## Revendications

1. Adhésif pour revêtement ou doublage et pour stratification, consistant en:

a) une dispersion aqueuse de copolymères de motifs d'esters vinyliques avec des acides alkylcarboxyliques ayant 1 à 18 atomes de carbone ou des esters de l'acide acrylique avec des alcanols ayant 1 à 18 atomes de carbone ou des mélanges de ces monomères et au moins un autre monomère, présentant des extraits secs de 3 à 70% en poids,

b) 0,05 à 20% en poids d'un époxyde comportant au moins un groupe époxyde par molécule et ayant des poids moyens d'équivalents d'époxyde de 80 à 1000,

c) 0,05 à 20% en poids d'un durcisseur de type amine, les quantités étant à chaque fois rapportées au poids des copolymères, ainsi que

d) éventuellement d'autres additifs, adhésif caractérisé en ce que les copolymères de la dispersion a) contiennent en outre, par rapport au poids total des copolymères, 0,1 à 10% en poids de motifs, introduits par polymérisation, de monomères à insaturation éthylénique présentant des radicaux hydroxyles et carboxyles comme groupes fonctionnels.

2. Adhésif pour revêtement ou doublage et pour stratification selon la revendication 1, caractérisé en ce que les motifs, introduits par polymérisation, des monomères fonctionnels sont ceux d'acides mono- ou di-carboxyliques, ou mono- et di-carboxyliques, à insaturation éthylénique, comportant 3 à 18 atomes de carbone.

3. Adhésif pour revêtement ou doublage et pour stratification selon la revendication 1, caractérisé en ce que les motifs, introduits par polymérisation, des monomères fonctionnels sont ceux du N-méthylol(meth)acrylamide.

4. Procédé de préparation de l'adhésif selon la revendication 1, caractérisé en ce que:

I. à 1 partie en poids de la dispersion a), ayant un extrait sec de 3 à 70% en poids, on ajoute 0,1 à 40% en poids, par rapport aux copolymères, d'un époxyde ayant un poids moyen d'équivalent d'époxyde de 80 à 1000 et comportant au moins un groupe époxyde par molécule, et éventuellement d'autres additifs,

II. à 0,7 à 1,3 partie en poids de la dispersion a) indiquée en I, on ajoute 0,1 à 40% en poids (par rapport aux copolymères) d'un durcisseur de type amine et éventuellement d'autres additifs, puis l'on mélange ces composants I et II ensemble jusqu'à obtenir un mélange homogène.

5. Application de l'adhésif selon la revendication 1 à la préparation de stratifiés obtenus à partir d'objets plats en polyoléfine, polyester, polyamide, polymère vinylique et/ou vinylidénique et/ou en de la cellulose modifiée.

6. Application de l'adhésif selon la revendication 1 au revêtement ou doublage de papier, de carton ou de métal à l'aide d'objets plats en de la polyoléfine, du polyester, du polyamide, du polymère vinylique et/ou vinylidénique et/ou de la cellulose modifiée.